Europäisches Patentamt

European Patent Office

Office européen des brevets

(19)

(11) Publication number: **0 009 859**

**B1**

(12)

# EUROPEAN PATENT SPECIFICATION

(45) Date of publication of patent specification: **21.11.84**

(21) Application number: **79301012.5**

(22) Date of filing: **31.05.79**

(51) Int. Cl.³: **C 04 B 35/58, B 23 B 27/14, C 01 B 21/06**

(54) **Ceramic cutting tool composition, method of its manufacture and its use in machining cast iron.**

(30) Priority: **31.05.78 US 911255**
**31.05.78 US 911256**

(43) Date of publication of application:
**16.04.80 Bulletin 80/08**

(45) Publication of the grant of the patent:
**21.11.84 Bulletin 84/47**

(84) Designated Contracting States:
**DE FR GB SE**

(56) References cited:
**DE-A-2 301 426**
**DE-A-2 346 586**
**DE-A-2 359 802**
**DE-A-2 718 729**
**DE-A-2 759 243**
**DE-B-2 351 163**
**US-A-3 830 652**

(73) Proprietor: **FORD MOTOR COMPANY LIMITED**
**Eagle Way**
**Brentwood Essex CM13 3BW (GB)**
(84) **GB**

(73) Proprietor: **FORD-WERKE**
**AKTIENGESELLSCHAFT**
**Ottoplatz 2 Postfach 21 03 69**
**D-5000 Köln 21 (DE)**
(84) **DE**

(73) Proprietor: **FORD FRANCE SOCIETE ANONYME**
**344 Avenue Napoléon Bonaparte B.P. 307**
**F-92506 Rueil Malmaison Cedex (FR)**
(84) **FR**

(73) Proprietor: **Ford Motor Company**
**The American Road**
**Dearborn, MI 48121 (US)**
(84) **SE**

(72) Inventor: **Samata, Shyam Kinkar**
**4770 Textile Rd.**
**Ypsilanti Michigan 48197 (US)**
Inventor: **Subramanian, Krishnamoorthy**
**625 Tobin Drive Apt. 208**
**Inkster Michigan 48141 (US)**

Courier Press, Leamington Spa, England.

(56) References cited:
JOURNAL OF THE AMERICAN CERAMIC SOCIETY Vol. 61, No. 1/2, 1978, Easton, N. CLAUSSEN et al. "Mechanical Properties of Sintered and Hot-Pressed Si3N4-ZrO2 Composites" pages 94 to 95
ASTM Standard no. C651-70;
Newnham:Strength tests for brittle materials, Proceedings of the British Ceramics Society, 1975, (25), pp. 281-293

(72) Inventor: Ezis, Andre
23235 West River Rd.
Grosse, Ille Michigan 48138 (US)
Inventor: Moskowitz, David
27450 Pierce
Southfield Michigan 48076 (US)

(74) Representative: Drakeford, Robert William et al
Ford Motor Company Limited 15/448, Research & Engineering Centre Laindon
Basildon Essex SS15 6EE (GB)

## Description

This invention relates to ceramic compositions and articles made therefrom. Ceramic compositions composed principally of silicon nitride ($Si_3N_4$) have found significant use as ceramic components for machines or as vessel coatings. This material is known to have many good characteristics such as high oxidation resistance at high temperatures (1400°C), good mechanical strength at high temperatures, and good hardness at high temperature.

The strength of this material is related to its density and it has been found that the densification property of silicon nitride, sintered under atmospheric pressure, is very inferior. Therefore, it has been considered important to employ high pressure when a product of good strength is desired. This is commonly referred to as "hot pressing" of silicon nitride. However, in spite of the use of hot pressing, the bend strength of simple $Si_3N_4$ has not been as high as desired at high temperatures. Accordingly, other avenues of strength improvement have been sought such as through the use of additives which operate as a low temperature liquid phase to facilitate densification and not significantly impairing the creep resistance of the ceramic body at high temperatures. These added materials have included relatively large amounts of chromium oxide, zinc oxide, nickel oxide, titanium oxide, cerium oxide, magnesium oxide, yttrium oxide and others. Silicon nitride with these particular additives tends to form a structure having a strength level which does not usually exceed 345 MPa (50 KSI) at high temperatures. In one instance (US—A—3,830,652 to Gaca) did the prior art obtain strength levels in excess of 345 MPa (50 KSI. In this instance, the concern was for physical characteristics useful for turbine elements: hardness, oxidation resistance (inertness) and transverse rupture strength, Gaza explored yttrium compounds as additives to a $Si_3N_4$ system which ranged in amounts of from 1.0 to 3.5 wt%.

However, commercial cutting tools today exhibit the same or better physical properties that were the focus of Gaza's work. For example, commercial $Al_2O_3$ or TiC tools have excellent hardness at high temperature, high resistance to oxidation and transverse rupture strengths at high temperatures which range up to 100,000 ($6.8 \times 10^5$ kPa) psi. Strength is considered the most important feature because of the necessity to withstand forces imposed on the tool material by the tool fixture and by the resistance of the stock material, particularly at heavy depths of cutting. These forces become unusually exaggerated when cutting ferrous material such as cast iron at high speeds and feeds. Without increased strength, it is believed by those skilled in the art that further improvements in tool life cannot be achieved.

Since the strength level of $Si_3N_4$ is equal to or lower than commercial materials now available, it has been rejected as a tool material with little hope in improving tool life.

DE—A—2346586 discloses the possibility of using $Si_3N_4$, with the optional addition of oxidic pressing and sintering aids as a cutting tool material for light metals such as aluminium alloys. A similar use is reported in a Japanese Patent 49—113803 (dated 30th October 1974) by Kazutake Ohgo, a summary of which appears in *Chemical Abstracts*, Volume 84, 1976, page 286 (84:21440t). In this work silicon nitride was sintered (as opposed to hot pressing) and metal oxide spinels were employed in solid solution in the silicon nitride matrix. The spinels were formed by a mixture of divalent and trivalent metal oxides (including magnesium oxide and $Y_2O_3$). However, the molar percentage of the spinel metal oxide in the material was taught to be 10—40%. The author experienced difficulty in obtaining good sintering density when the molar percentage fell below 10. The highest density achieved was 3.18 g/cm³. A two step method was used by this author requiring first a heating of the metal oxide powders to 1300—1600°C for 3—10 hours to form the spinel. The spinel was pulverized and mixed with a silicon nitride powder, which in turn, was sintered to form cutting tools. Only a quarternary system was employed involving $Si_3N_4$, $SiO_2$, MgO, and $Y_2O_3$. This produced many secondary phases which weakened the physical characteristics, particularly strength, thermal conductivity, and increased the thermal coefficient of expansion. A loss of these physical characteristics make it most difficult to obtain even equivalent performance to commercially available tools when applied to a rigorous cutting environment such as interrupted cutting on cast iron. The cutting operation was of very short duration (2 minutes) of continuous machining and at low metal removal rates (cutting speeds of 305 m per minute) (1000 sfm), 0.3 mm (0.012 inches) per rev. of feed and 1.5 mm (0.060 inches) of depth of cut and metal removal of 141.7 cm³/min (8.64 in.³/min)). This type of test information, of course, did not investigate cutting applications where large forces are applied to the tool, did not investigate the elimination of spinel additives, did not investigate heavy cutting against rough surfaces such as cast iron, nor continuous cutting for periods of several hours or greater, nor did it explore intermittent, interrupted high speed cutting at speeds of 1220—1525 m per minute (4000—5000 sfm) at heavy feeds and depths of cutting. The demonstrated wear of 0.15—0.2 mm (0.006—0.008 inches), in Ohgo's work for 2 minutes of cutting time is highly excessive when compared to the goals of the present invention. Therefore, this work did not demonstrate that $Si_3N_4$ possessed sufficient characteristics to be used as a tool material on ferrous materials which apply large bend forces to the tool.

Moreover, the art has been possessed of sufficient knowledge in the making of $Si_3N_4$ with additives for many years; during this long term no effort was made to apply this material as a cutting tool against cast iron. This tends to support the contention of this invention that if tool life is dramatically increased for certain $Si_3N_4$ composites when used for machining cast iron, there must be some unobvious characteristics independent of strength that layed undiscovered to promote this new use.

The present invention provides a method of machining cast iron characterised in that the cast iron is machined with a cutting tool composed of a hot-pressed silicon nitride ceramic composition containing at least one metal oxide selected from $Y_2O_3$, $ZrO_2$ and $MgO$, and having a thermal shock parameter at 1200°C of at least

$$75 \times 10^{16} \, J.kg.^{-1}m^{-3}(26 \times 10 \frac{BTU^9 lbs}{(h.^{-1}in^{-3})})$$

The invention also provides a ceramic composition comprising silicon nitride, from 4—12% by weight $Y_2O_3$, and $SiO_2$ in an amount such that the ratio of $Y_2O_3$ to $SiO_2$ is from 1.2 to 3.0.

We have found that a correlation exists between a thermal shock parameter and promotion of prolonged life in $Si_3N_4$ materials when used as a cutting tool on cast iron. This parameter consists of

$$\frac{KS}{\alpha E}$$

where K is thermal conductivity of the material, S is the modulus of rupture, $\alpha$ is the coefficient of thermal expansion, and E is Young's modulus. The modulus of rupture S is determined by a standard 4-point bending test such as described in an article by R. C. Newnham in Proceedings of the British Ceramics Society, 1975, No: 25 at pages 281—293, or in ASTM Standard No: C651—70. E can be eliminated from the parameter since it remains substantially constant for the contemplated variation in ceramic chemistry which controls this parameter. In order to obtain the most significant improvements in tool life, this parameter must exceed 179 kPa (26 lbs/in²). In the preferred compositions of invention, which are simple ternary ceramic systems ($Si_3N_4$. $SiO_2$. low temperature liquid phase), the $SiO_2$ is present, not as an additive, but as an inherent reaction product of heating $Si_3N_4$, which provides the proper mechanism for achieving the required thermal shock parameter. The low temperature liquid phase must be one which produces a small amount of a highly refractory silicate which will reside totally in the grain boundary of the matrix. There are many other physical characteristics beyond its thermal shock parameter that should be improved in silicon nitride if it is to be successful as a tool material for cutting cast iron. As indicated earlier, the densification of the material has been a point of concern and has been alleviated by use of hot pressing techniques and oxide additives. This has permitted the density to be elevated close to theoretical density, but improving the density by itself through increasing amounts of oxide leads to a decrease in several other physical properties. Investigators have failed to perceive this interplay of physical characteristics.

More importantly, known silicon nitride compositions, when used as a cutting tool against relatively rough surfaces such as cast iron, exhibit a failure mode under such circumstances is typically due to thermal shock as opposed to the more desirably mode by wear. Further the attainable hardness level and general rigidity of the known silicon nitride composites have yet to be comparable to commercial cutting tools.

Desirably the composition has a density of at least 95% of the theoretical density, which is usually at least 3.25 g/cm³. Preferably the transverse rupture strength of the ceramic material is at least 45 MPa (67,000 psi) at 1200°C and its hardness is at least 86 Rockwell 45-N. The modulus of elasticity of the composition is preferably no greater than $39 \times 10^5$ MPa ($56 \times 10^6$ psi). The thermal conductivity of the composition is preferably at least 0.15 g.cal.sec$^{-1}$cm$^{-1}$°C$^{-1}$ (3.0 BTU/hr.in.°F), and its coefficient of expansion is preferably no greater than $6.5 \times 10^{-6}$°C$^{-1}$($1.9 \times 10^{-6}$ in/in.°F).

Where the metal oxide is $Y_2O_3$ the thermal shock parameter of the composition is preferably at least

$$321 \times 10^{16} \, J.kg.h^{-1} \, m^{-3} (110 \times 10^9 \frac{BUT\text{-}lbs}{Hr \, (in^3)})$$

at 1200°C, and its hardness is preferably at least 87 Rockwell 45-C. The bend strength of the composition is preferably 480 MPa (70,000 psi) at 1200°C and its density is preferably at least 3.398 g/cm³. The thermal conductivity of the composition is preferably at least 1.6 g.cal.sec.$^{-1}$ cm$^{-1}$. °C$^{-1}$ (3.2 BUT/Hr. in. °F) and its coefficient of thermal expansion is preferably no greater than $3.36 \times 10^{-6}$. °C$^{-1}$ ($1.87 \times 10^{-6}$ in/in. °F). The modulus of elasticity is preferably no greater than $3.6 \times 10^5$ MPa ($53 \times 10^6$ psi).

The ceramic compositions of the invention are preferably formed by heating a mixture of silicon nitride, which is preferably completely in the alpha phase, and from 4—12% by weight of yttria and silica, the ratio of yttria to silica being from 1.2 to 3.0, the mixture being substantially free from spinel oxides, to a temperature of from 1700 to 1750°C for a period of from 3 to 8.5 hours (preferably less than 8 hours) at a pressure of from 34—45 MPa (5000 to 6,500 psi) (preferably 34—41 MPa (5—6000 psi)) and allowing the material to cool. Preferably the material is allowed to cool slowly without application of pressure at a rate of at least 100°C/hour.

The preferred method of the invention results in a ($Si_3N_4$. $SiO_2$. metal oxide) ceramic system which exhibits a thermal shock parameter at 1200°C which is at least

$$75 \times 10^{16} \text{ J.Kg.h}^{-1}\text{M}^{-3}(26 \times 10^9 \frac{\text{BTU-lbs}}{\text{Hr (in}^3)})$$

and a thermal shock parameter at room temperature which is at least

$$642 \times 10^{16} \text{ J.kg-h}^{-1} \text{ m}^{-3} (220 \times 10^9 \frac{\text{BTU-lbs}}{\text{Hr(in}^3)}).$$

The ceramic system should be regulated to avoid the presence of a spinel oxide and to insure formation of a low temperature liquid phase effective to form a highly refractory silicate residing only in the grain boundaries of the $Si_3N_5$ matrix. Additionally both the processing of the ceramic system and the formulation of the system should be regulated to provide a combination of specific physical characteristics in the material including; physical strength (as measured in a 4-point bend test) which is at least 480 MPa 70,000 psi at 700°C, a hardness level which is at least 86 using the Rockwell 45-N standard, a density of at least 3.25 g/cm³, a coefficient of thermal expansion which is no greater than $3.36 \times 10^{-6}$ °C$^{-1}$($1.88 \times 10^{-6}$ in/in°F) at 1200°C, a modulus of elasticity no greater than $361 \times 10^6$ kPa ($55.3 \times 10^6$ psi), and a thermal conductivity of at least 0.1 Jm/m²s°C (0.727 BTU/Hr in.°F).

Preferred embodiments of the invention will now be described by way of example only, with reference to the drawings, in which:—

Figure 1 is a perspective view of the work stock employed in a first set of laboratory cutting operations requiring continuous cutting simulation.

Figure 2 is an end view of a work stock similar to Figure 1 illustrating the mode to simulate interrupted cutting.

Figure 3 is central sectional view of a stator support casting used the stock material for production machining examples.

Figure 4 is a graphical illustration of wear life to failure vs. thermal shock parameter employing the invention.

Figure 5 is a graphical illustration of wear life to failure vs. $Y_2O_3/SiO_2$ ratio.

The tendency toward higher speeds and feeds to achieve lower production costs and higher productivity imposes an ever increasing demand for greater wear life on cutting tools. The temperature rise at the tool tips at these speeds and feeds is very high. Tool materials have to be inert at such working temperatures and their dynamic properties have to be superior than those of existing tool materials.

In accordance with this invention, it has been discovered that $Si_3N_4$, when combined with critically controlled amounts of certain metal oxides in a narrow volume fraction range, then hot pressed under controlled temperature, pressure and time conditions, will produce a cutting tool composition for a simple ternary system ($Si_3N_4$. $SiO_2$. $Y_2O_3$) that can be utilized at high speeds and heavy feeds on cast iron and will exhibit high wear resistance and will fail by a mode of gradual wear rather than thermal fatigue or catastrophic failure.

The cutting tool formulation meets the needs of a specific set of cutting conditions created by working on cast iron. The tip temperature of the tool will experience a temperature typically in the range of 600—800°C. This temperature factor is important since it is high enough to create thermal shock sites in portions of the tool, but not high enough to create a serious oxidation erosion problem. When machining cast iron, the chip easily fragments keeping any hot chip normally away from the tool tip.

Due to the resistance of cast iron to cutting, large fixture forces must be applied to the tool to move it through the stock material. Moreover, the mass removal rates required in many cutting operations on cast iron is considerably greater than used with other stock materials. This necessitates a strong tool material with respect to transverse rupture strength. All tool designers consider this latter aspect the most important consideration with respect to evaluating the success of a new tool material.

The three virtues normally recognized of $Si_3N_4$ would not suggest to one skilled in the art that it would be a successful candidate for machining cast iron. Its transverse rupture strength at high temperature rarely exceeded 345 MPa (50,000 psi) (while commercial tool regularly experienced strength levels of 690—1380 MPa (100,000—200,000 psi); its high oxidation resistance was not critically needed; and its good hardness at high temperature was easily exceeded by the hardness of commercially available silicon carbide tools.

The present invention recognized for the first time the role played by thermal shock resistance factors, namely, the coefficient of thermal expansion ($\alpha$) and thermal conductivity (K) related to the modulus of rupture (S). This is defined herein by the expression

$$\frac{KS}{\alpha E}$$

where E is Young's modulus and can be eliminated because it remains substantially constant under varying cutting conditions and material variations. By maintaining this thermal shock parameter above

$$75 \times 10^{16} \text{ J.kg.h}^{-1}\text{m}^{-3}(26 \times 10^9 \frac{\text{BTU-lbs}}{\text{Hr (in}^3)}),$$

it has been determined that a significant increase in wear life can be achieved on cast iron. It is difficult to theorize why this phenomenon takes place, but it may be due to the greater structural stability that is achieved by the ceramic at 700°C when generated heat is quickly conducted away preventing a large temperature gradient in the tool which leads to cracking if the material has an undesirable coefficient of thermal expansion; this may more readily be experienced when the tool tip is slightly cooled by intermittent or interrupted cutting.

A preferred method for making such a cutting tool is as follows:

(1) A first powder of substantially alpha phase silicon nitride is prepared having less than 1.0% cation impurities (excluding free silicon), about 1% free silicon, and about .7% by weight oxygen.

(2) A second powder of one or more selected metal oxides is prepared. The metal oxides are selected from a group consisting of $Y_2O_3$, MgO, and $ZrO_2$. These metal oxides arecharacterized by their small atom size and their affinity to form a low temperature liquid phase which solidifies as a highly refractory silicate residing solely within the grain boundaries of the matrix. The oxides must be simple; it is important to avoid the formation of spinels which will produce weaker secondary phases.

(3) The first and second powders are blended and mixed in a prescribed proportion. The second powder should have a weight percent of 1—15%. However, the ingredients of the second powder must fall within the following ranges: 0.75—5% MgO, 4—12% $Y_2O_3$, and 1—13% $ZrO_2$.

(4) The powder mixture is heated to a temperature level of 1700—1750°C for a period of 3.—6.8 hours under a pressure of 34—45 MPa (5,000—6,500 psi), and allowed to cool at an average rate of 100°C/hr. The hot pressed compact will exhibit substantially complete Beta phase silicon nitride.

The resulting product must exhibit the following combination of physical characteristics:—

(a) 100% theoretical density (Zero porosity);
(b) a thermal shock parameter of at least

$$75 \times 10^{16} \text{ J.kg.h}^{-1} \text{ m}^{-3}(26 \times 10^9 \frac{\text{BTU-lbs}}{\text{Hr (in}^3)})$$

(c) a transverse rupture strength at 1200°C (in 4-point bending) of at least 45 MPa (67,000 psi);
(d) a hardness level of at least 86 Rockwell 45-N;
(e) a measured density of at least 3.25 g/cm³;
(f) a wear life characterized by measured wear of no greater than 0.25 mm (.010") after one hour of continuous cutting of cast iron at a mass removal rate of at least 410 cm³/min (25 in³/min) or mechanical failure under cutting conditions prescribes by at least 510 m (2000 feet) per minute with a depth of cut of at least 1.5 mm (.06 inches) and a rate of feed of at least 0.3mm (.012 inches per IPR);
(g) the absence of tool failure by fracture or shipping.

The following examples illustrate the invention:—

Example 1

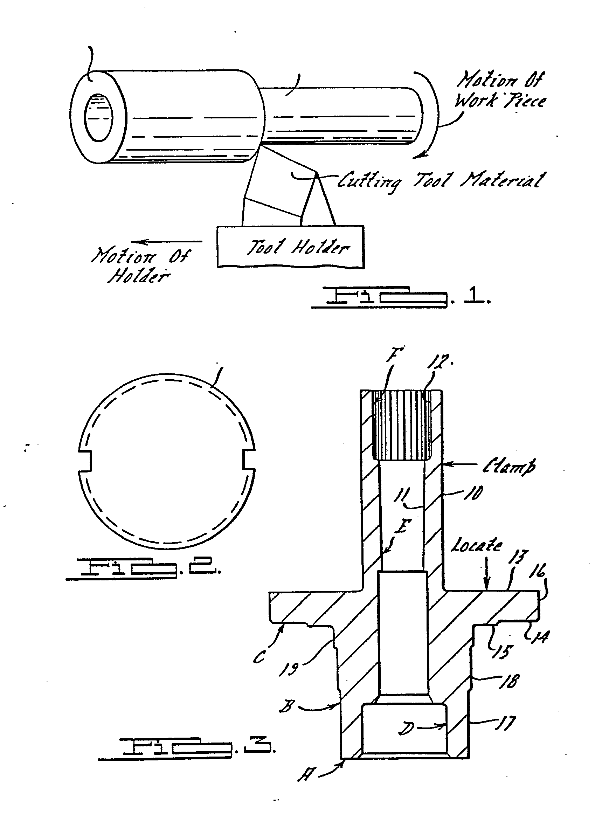

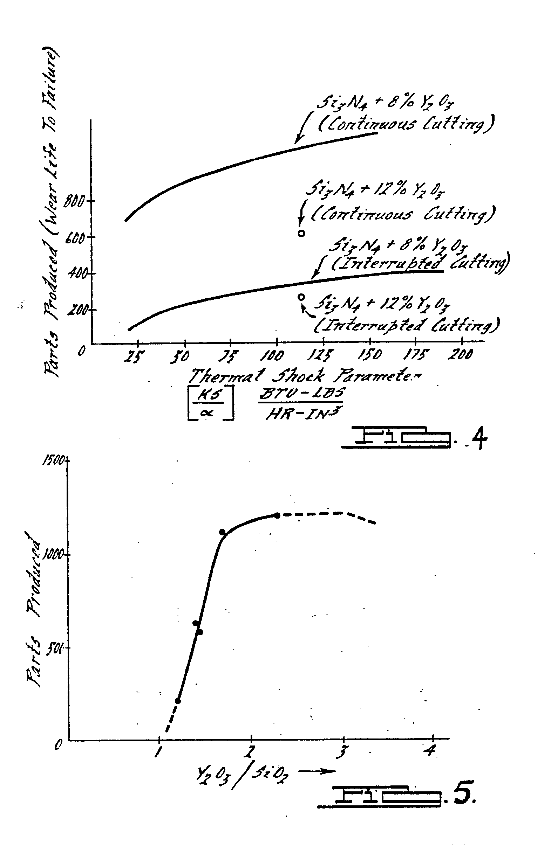

A sample cutting tool material (identified as Sample 1) was prepared employing hot pressed silicon nitride with 7.47 weight. percent $Y_2O_3$ (8% $Y_2O_3$ was added as a powder to a powder having 85% alpha phase $Si_3N_4$); the powder mixture was hot pressed at a temperature 1740°C under 6500 psi 9.55×10⁶ kilogram/cm² (6500 psi) for a period of 6-1/2 hrs. The pieces of hot pressed material were ground to a tool geometry of SNG 434 and the edges were prepared with 0.015 mm (0.006")×30°K land (chamfer). Each of the cutting tools prepared from this material were subjected to a cutting sequence on a simple cylindrical cast iron casting which varied between continuous, intermittent, or interrupted. As shown in Figure 1, the continuous cutting consisted of generating cylindrical surface 10 at a prescribed speed, feed and depth of cut. Due to the expanded length of the cylinder 11, the tool tip experiences a relatively constant high temperature for the duration of the pass. Intermittent cutting consisted of withdrawing the tool intermittently along a longitudinal pass. Interrupted cutting consisted of passing the tool circumferentially about the cylinder along a path 12 (as shown in Figure 2) which path encounters the previously cut longitudinal grooves. The latter provides repeated impacts for the tool.

Each type of cutting style imposes a different thermal condition on the tool which affects tool life in different ways. Other tool material samples were similarly prepared with different chemistries, as shown in Table 1, along with their resultant physical properties. The cutting operation for all these samples was carried out in a laboratory environment at a variety of speeds and varying feed rates at a constant depth of cut; the tool geometry was varied only in the corner configuration as indicated. The wear in inches was measured for specific period of time. The results of such cutting are shown in Table II. None of the tools were used to full life; the cutting time was terminated when a significant increase in tool life was perceived. Five minutes, under high cutting speeds (3,000—4,000 sfm) was deemed an unusually high increase in life, when compared to commercial tools which typically fail after one minute.

It is believed that optimization of the thermal shock parameter of $Si_3N_4$ under extreme temperature conditions has led to this increase in tool life. The ability to have a stable structure at 600—800°C temperature while under severe stress along with the ability to effectively conduct away heat preventing a loss in high temperature strength provides the basis for this life improvement. These physical characteristics are critically affected by the compositional phase of the $Si_3N_4$ composite. It is most important that the selected additives form a highly stable refractory silicate which resides totally in the grain boundary of the matrix.

Example II

Substantially the same cutting tool materials, prepared as indicated from Example 1, were prepared for cutting use in a production environment with actual production machines at Ford Motor company's machining plants. The casting to be machined was a difficult production vehicle casting (stator support) in some cases and an engine block in others; the stator support is shown in Figure 3. For the stator support, continuous cutting was experienced at surfaces B and D, intermittent cutting at surface A, and interrupted cutting at surfaces C and F.

These sample materials were run under a variety of cutting conditions as set forth in Table III. All tool materials were run to failure which is measured by the number of pieces produced up to that failure event. Failure herein is defined (as regularly as accepted in the industry) to mean loss of workpiece tolerance or failure by fracture or chipping.

From the data in Tables II and III, we have discovered that controlled processing of $Si_3N_4$ with $Y_2O_3$, MgO, or ZrO provides the kind of thermal shock parameter that leads to longer tool life when machining cast iron at large mass removal rates or high speed. These metal oxides operate upon the controlled free silica to form a highly stable refractory silicate which resides totally in the grain boundary of the $Si_3N_4$ matrix.

Table III proceeds from lower cutting speeds to higher speeds with comparative materials grouped adjacent each other. For each comparison the inventive samples render significant increases in tool life.

The inventive materials perform 3—8 times better than the current commercial tools. In finish machining of the front end of an engine block the number of blocks milled were 2100 pieces per corner with a depth of cut of 1.6 mm (.065 inch). Whereas using commercially available ceramics with half of that feed rate, the number is 600 pieces. The inventive material will provide (a) increased production at current cutting conditions, (b) increased production capacity at higher cutting speeds and feeds, (c) savings in tool material cost, (d) reduction in tool change downtime, and (e) increased production capacity leading to free machine time for preventive maintenance.

To obtain at least a four-fold increase in tool life over commercially available tool materials the $Si_3N_4$ . $SiO_2$ . $Y_2O_3$ ternary system must be employed with $Y_2O_3$ controlled to a limit of 7—9%. In this manner the thermal shock parameters can be optimized at either continuous or interrupted cutting conditions. Figure 6 and Table IV portrays the role played by the thermal shock parameter.

Additionally, $Y_2O_3/SiO_2$ ratio must exceed 1.60. The influence of the $Y_2O_3/SiO_2$ ratio is portrayed in Figure 7 and Table V.

TABLE I

| Material sample | S, Transverse rupture strength (4-point bending), mPa (KSI) | | Hardness room temp rockwell 45-N | Density gm/cm³ | Coefficient of thermal expansion $\alpha, \times 10^{-6}\,°C^{-1}$ ($\times 10^{-6}$ in/in °F) | |
|---|---|---|---|---|---|---|
| | room temp. | 1200°C | | | room temp. | 1200°C |
| Sample No. 1 $Si_3N_4 + 8\%Y_2O_3$ | 713 (103.6) | 728 (105.7) | 87.6 | 3.4 | 1.56 (0.87) | 1.63 1.87 |
| Sample No. 2 $Si_3N_4 + 11\text{—}12\%$ $Y_2O_3$ | | (115) | (70) | 87.0 | 3.398 | 2.7 (1.5) | 4.8 (2.7) |
| Sample No. 3 $Si_3N_4 + 5\%\,MgO$ | 585 (85) | 516 (67) | 86.3 | 3.272 | 1.5 (.84) | 3.3 (1.84) |
| Sample No. 4 $Si_3N_4 + 1\%\,MgO$ | 888 (129) | 602 (87.4) | 89.2 | 3.25 | 1.3 (.74) | 3.1 (1.74) |
| Sample No. 5 $Si_3N_4 + 15\%$ (88% $ZrO + 12\%\,Y_2O_3$ known as Zytrite) | Substantially equivalent properties to Sample 2. | | | | | |
| Sample No. 6 $Si_3N_4 + 15$(88% ZrO $+ 12\%\,Y_2O_3 + 1.5$ Fe impurities known as modified Zytrite) | Substantially equivalent properties to Sample 2. | | | | | |
| Sample No. 7 SiC (Prior Art) | | 640 (93) | 91.5 | 3.29 | 2.75 (1.53) | 4.6 (2.57) |
| Sample No. 8 $Al_2O_3$ (Prior Art) | 516 (75) | 206 (30) | 90.14 | 4.252 | 7.9 (4.4) | 10.2 (5.7) |

8

TABLE I (Contd)

| Material sample | K, Thermal conductivity, g.cal.sec$^{-1}$ cm$^{-1}$ °C$^{-1}$ (BTU/Hr in °F) | | J.kg.h$^{-1}$ m$^{-3}$×10$^6$ (BTU lbs. h$^{-1}$ in$^{-3}$×109) KS/$\alpha$, thermal shock factor | | E (Young's modulus kPa×10$^6$ (psi×10$^6$) |
|---|---|---|---|---|---|
| | room temp. | 1200°C | room temp. | 1200°C | |
| Sample No. 1 | 0.16 (3.23) | 0.16 (3.23) | 515 (179) | 524 (182) | 365 (53) |
| Sample No. 2 | 0.22 (4.4) | 0.22 (4.4) | 970 (337) | 328 (114) | 351 (51) |
| Sample No. 3 | 0.095 (1.917) | 0.036 (0.727) | 559 (194) | 75 (26) | 381 (55.3) |
| Sample No. 4 | 0.095 (1.917) | 0.036 (0.727) | 961 (334) | 103 (36) | 377 (54.7) |
| Sample No. 5 | Substantially equivalent properties to Sample 2. | | | | |
| Sample No. 6 | Substantially equivalent properties to Sample 2. | | | | |
| Sample No. 7 | 0.2 (4.09) | 0.86 (1.72) | | | |
| Sample No. 8 | 0.09 (1.9) | 0.15 (3) | 933 (324) | 46 (16) | 416 (67) |

TABLE II

| Sample No. | Corner configuration number | Cutting condition | | | Mass of material removed cm$^3$/min. (in$^3$/min) |
|---|---|---|---|---|---|
| | | Speed meters per min. (sfm) | Feed mm per revolution (ipr) | Depth of cut (in.) mm | |
| Continuous Cutting. 1A | 1 | 1220 (4000) | .25 (.010) | (.100) 2.54 | 787 (48) |
| 1B | 3 | 915 (3000) | .5 (.020) | (.100) 2.54 | 1181 (72) |
| 1C | 1 | 915 (3000) | .25 (.010) | (.100) 2.54 | 590 (36) |
| 1D | 1 | 610 (2000) | .28 (.0111) | (.100) 2.54 | 433 (26.4) |
| 1E | 3 | 305 (1000) | .56 (.0222) | (.100) 2.54 | 433 (26.4) |
| 1F | 2 | 228 (750) | .74 (.029) | (.100) 2.54 | 433 (26.4) |
| 1G | 1 | 152 (500) | 1.12 (.044) | (.100) 2.54 | 433 (26.4) |
| 1H | 2 | 101 (333) | 1.67 (.066) | (.100) 2.54 | 433 (26.4) |
| ll | 3 | 610 (2000) | .28 (.011) | (.100) 2.54 | — |

**0 009 859**

TABLE II (Contd.)

| Sample No. | Corner con-figuration number | Cutting condition | | | | Mass of material removed cm³/min. (in³/min) |
|---|---|---|---|---|---|---|
| | | Speed meters per min. (sfm) | Feed mm per revolution (ipr) | Depth of cut (in.) mm | | |
| **Intermittent cutting.** | | | | | | |
| IK | 2 | 305 (1000) | .28 (.011) | (.100) 2.54 | | 216 (13.2) |
| IL | 5 | 228 ( 750) | .74 (.029) | (.100) 2.54 | | 433 (26.4) |
| IM | 6 | 228 ( 750) | 1.12 (.044) | (.100) 2.54 | | 649 (39.6) |
| IN | 7 | 152 ( 500) | .28 (.011) | (.100) 2.54 | | 108 (6.6) |
| IO | 4 | 610 (2000) | .28 (.011) | (.100) 2.54 | | 433 (26.4) |
| IP | 8 | 305 (1000) | .56 (.022) | (.100) 2.54 | | 433 (26.4) |
| **Interrupted cutting.** | | | | | | |
| IQ | 6 | 305 (1000) | .28 (.0111) | (.100) 2.54 | | 216 (13.2) |
| IR | 8 | 305 (1000) | .56 (.0222) | (.100) 2.54 | | 433 (26.4) |
| IS | 7 | 610 (2000) | .28 (.0111) | (.100) 2.54 | | 433 (26.4) |
| **Continuous cutting.** | | | | | | |
| 3A | 1 (Trial 1) | 610 (2000) | .28 (.0111) | (.100) 2.54 | | 433 (26.4) |
| 3B | 3 (Trial 2) | 610 (2000) | .28 (.0111) | (.100) 2.54 | | 433 (26.4) |
| 3C | 4 | 305 (1000) | .56 (.0222) | (.100) 2.54 | | 433 (26.4) |
| **Interrupted cutting** | | | | | | |
| 3D | 4 | 305 (1000) | .56 (.0222) | (.100) 2.54 | | 433 (26.4) |
| **Continuous cutting.** | | | | | | |
| 4A | 1 | 610 (2000) | .28 (.0111) | (.100) 2.54 | | 433 (26.4) |
| 4B | 2 | 305 (1000) | .56 (.0222) | (.100) 2.54 | | 433 (26.4) |
| 5A | 2 (Trial 1) | 610 (2000) | .28 (.0111) | (.100) 2.54 | | 433 (26.4) |
| 5B | 3 (Trial 2) | 610 (2000) | .28 (.0111) | (.100) 2.54 | | 433 (26.4) |
| 5C | 1 | 305 (1000) | .56 (.0222) | (.100) 2.54 | | 433 (26.4) |
| 6A | (Trial 1) | 610 (2000) | .28 (.011) | (.100) 2.54 | | 433 (26.4) |
| 6B | (Trial 2) | 610 (2000) | .28 (.011) | (.100) 2.54 | | 433 (26.4) |
| 6C | | 305 (1000) | .56 (.0222) | (.100) 2.54 | | 433 (26.4) |
| **Continuous cutting.** | | | | | | |
| 7A | | 610 (2000) | .28 (.0111) | (.10) 2.54 | | 433 (26.4) |
| 7B | | 305 (1000) | .56 (.0222) | (.10) 2.54 | | 433 (26.4) |
| 7C | | 305 (1000) | .28 (.0111) | (.100) 2.54 | | 216 (13.2) |

TABLE II (Cont.)

| Sample No. | Time (MIN) or (min-sec.) | Tool wear mm (inches) | | Thermal and mechanical cracks |
|---|---|---|---|---|
| | | Flank | Crater | |
| Continuous cutting. | | | | |
| 1A | 5.2 | none | none | NIL |
| 1B | 5.7 | none | none | NIL |
| 1C | 17.5 | none | none | NIL |
| 1D | 43.7 | none | none | NIL |
| 1E | 26.8 | none | none | NIL |
| 1F | 11.7 | none | none | NIL |
| 1G | 10.5 | none | none | NIL |
| 1H | 1.9 | none | none | Mechanical Fracture |
| 1I | 21.0 | 0.38 (.015) | none | NIL |
| Intermittent cutting. | | | | |
| 1K | 2.3 | none | none | NIL |
| 1L | 1.1 | none | none | NIL |
| 1M | 0.6 | none | none | NIL |
| 1N | 4.1 | none | none | NIL |
| 1O | 8.8 | none | none | NIL |
| 1P | 7.7 | none | none | NIL |
| Interrupted cutting. | | | | |
| 1Q | 3.7 | 0.294 (.0116) | NIL | NIL |
| 1R | 10.0 | 0.033 (.0013) | NIL | NIL |
| 1S | 10.5 | 0.053 (.0021) | NIL | NIL |
| Continuous cutting. | | | | |
| 3A | 2.05 | 0.139 (.0055) | — | NIL |
| 3B | 9.95 | 0.038 (.0015) | — | NIL |
| 3C | 9.92 | 0.048 (.0018) | — | NIL |
| Interrupted cutting. | | | | |
| 3D | 10.00 | | — | NIL |

TABLE II (Cont.)

| Sample No. | Time (MIN) or (min-sec.) | Tool wear mm (inches) Flank | Crater | Thermal and mechanical cracks |
|---|---|---|---|---|
| Continuous cutting. | | | | |
| 4A | 9.65 | 0.051 (.002) | — | NIL |
| 4B | 10.5 | 0.025 (.001) | — | NIL |
| 5A | 9.82 | 0.041 (.0016) | — | NIL |
| 5B | 10.00 | 0.051 (.002) | — | NIL |
| 5C | 9.88 | 0.048 (.0019) | — | NIL |
| 6A | 10.00 | 0.127 (.005) | — | NIL |
| 6B | 5.15 | 0.005 (.002) | — | NIL |
| 6C | 10.10 | 0.005 (.002) | — | NIL |
| 7A | 0'02" | Fraction by Fracture | | Mechanical Fracture |
| 7B | 0'15" | Fraction by Fracture | | Mechanical Fracture |
| 7C | 0'11" | Fraction by Fracture | | Mechanical Fracture |

TABLE III

| Sample No | Material | Cutting operation | Tool geometry | Cutting conditions | | | Work pieces produced before failure |
| | | | | Speed (sfm) m per min | Feed (ipr) cm per rev | Depth of cut | |
|---|---|---|---|---|---|---|---|
| 1 | Hot Pressed $Si_3N_4+8\%$ $Y_2O_3$ | Broaching of Engine block surface | SNG 636 | (150) 45.7 | — | (.02) 0.5 | 1910 |
| 10 | (Prior Art Tool) WC | " | " | (150) 45.7 | — | (.02) 0.5 | 800 |
| 1 | Hot Pressed $Si_3N_4+8\%$ $Y_2O_3$ | Rough facing of Surface A (intermittent cutting) | SNG 434 | (496) 151 | (.016) 0.42 | (.125—.250) 3.2—6.35 | 1200 |
| | Hot Pressed $Si_3N_4+1\%$ MgO | " | " | " | " | " | 800 |
| | Hot Pressed Si N+5% MgO | " | " | " | " | " | 740 |
| | (Prior Art Tool) SiC Lase tool coated with $Al_2O_3$ | " | " | " | " | " | 150 |
| 1 | Hot Pressed $Si_3N_4+8\%$ $Y_2O_3$ | Semi finish and finish bore surface E (continuous cutting) | TPG 322 | (516) 157 | (.012—.006) 0.30—0.15 | .025 0.63 | 1000 |

TABLE III (Contd.)

| Sample No | Material | Cutting operation | Tool geometry | Cutting conditions Speed (sfm) m per min | Feed (ipr) cm per rev | Depth of cut | Work pieces produced before failure. |
|---|---|---|---|---|---|---|---|
| | (Prior Art Tool) WC | " | " | " | " | " | 250 |
| 1 | Hot Pressed Si₃N₄+Y₂O₃ | Semi-finish and finish bore surface F (spline hole) (interrupted cutting) | TPG 322 | (516) 157 | (.0135—.006) 0.34—0.15 | (.025) 0.63 | 320 |
| 1 | Hot Pressed Si₃N₄+Y₂O₃ | Rough face of Surface C (interrupted cutting) | TNG 434 | (965—496) 294—151 | (.012) 0.030 | .093 2.36 | 420 |
| | Hot Pressed Si₃N₄+1% MgO | Rough face of Surface C (interrupted cutting | TNG 434 | (965—496) 294—151 | (.012) 0.30 | (.093) 2.36 | 140 |
| | (Prior Art Tool) SiC base tool coated with Al₂O₃ | " | " | " | " | " | 50 |

0 009 859

TABLE III (Contd.)

| Sample No | Material | Cutting operation | Tool geometry | Cutting conditions | | | Work pieces produced before failure |
| | | | | Speed (sfm) m per min | Feed (ipr) cm per rev | Depth of cut | |
|---|---|---|---|---|---|---|---|
| 1 | Hot Pressed $Si_3N_4+8\ Y_2O_3$ | Rough turning of outside diameter on surface B (continuous cutting) | TNG 434 | (998) 304 | (.014) 0.35 | (.0625) 1.59 | 420 |
| | (Prior Art Tool) SiC base tool coated with $Al_2O_3$ | Rough turning of outside diameter on surface B (continuous cutting) | TNG 434 | (988) 304 | (.014) 0.35 | (.0625) 1.59 | 50 |
| 1 | Hot Pressed $Si_3N_4+8\%\ Y_2O_3$ | Rough boring of inside diameter on surface D (continuous cutting) | TNG 434 | (1026— 674) 312—205 | (.0189— .0039) (0.48—0.99) | (.0625) 1.59 | 157 |
| | (Prior Art Tool) SiC base tool coated with $Al_2O_3$ | " | " | " | " | " | 50 |
| 1 | Hot Pressed $Si_3N_4+8\%\ Y_2O_3$ | Finish mill end of block (intermittent cutting) | | | (.0043) 0.11 | (.065) 1.65 | 2100 |
| | $Al_2O_3$ base +5% TiN | " | " | " | " | " | 400 |

TABLE IV

| Sample No. | Thermal shock parameter KS/$\alpha$ $10^6$ J.k.g. h.$^{-1}$ m$^{-3}$ ($10^9$ BTU-lbs.hr$^{-1}$ m$^{-3}$) Room temp | 1200°C | Parts Produced (Continuous cutting) end facing (A) | Interrupted cutting flange machine (B) |
|---|---|---|---|---|
| $Si_3N_4$+8% $Y_2O_3$ | 515 (179) | 524 (182) | 1200 | 420 |
| $Si_3N_4$+1% MgO | 962 (334) | 103 (36) | 800 | 140 |
| $Si_3N_4$+5% MgO | 634 (220) | 76 (26) | 740 | — |
| $Si_3N_4$+12% $Y_2O_3$ | | 328 (114) | 600 | 210 |
| $Al_2O_3$ | | 46 (16) | 200 | Fails by thermal cracking at outset |

K=Thermal Conductivity
S=Modulus of Rupture, (4-point bending)
$\alpha$=Coefficient of Thermal Expansion, $\times 10^{-6}$

TABLE V

| Material | Speed (m per min) (sfm) | Cutting condition Feed mm per rev. (ipr) | Depth of cut mm (in) | No. of work pieces produced |
|---|---|---|---|---|
| Hot Pressed $Si_3N_4$ with 8% $Y_2O_3$; $\dfrac{Y_2O_3}{SiO_2}$=2.30 | 151 (496) | 0.406 (.016) | 3.18—6.35 (.125—.250) | 1200 |
| Same; $\dfrac{Y_2O_3}{SiO_2}$=1.7 | ″ | ″ | ″ | 1112 |
| Same; $\dfrac{Y_2O_3}{SiO_2}$=1.41 | ″ | ″ | ″ | 620 |
| Same; $\dfrac{Y_2O_3}{SiO_2}$=1.18 | ″ | ″ | ″ | 200 |
| Hot Pressed $Si_3N_4$ with 11% $Y_2O_3$; $\dfrac{Y_2O_3}{SiO_2}$=1.45 | ″ | ″ | ″ | 580 |

## Claims

1. A method of machining cast iron characterised in that the cast iron is machined with a cutting tool composed of a hot-pressed silicon nitride ceramic composition containing at least one metal oxide selected from $Y_2O_3$, $ZrO_2$ and MgO, and having a thermal shock parameter at 1200°C of at least $75 \times 10^{16}$ J. $kg.h.^{-1}$ $m^{-3}$.

2. A method according to claim 1 wherein the ceramic composition comprises a ternary system containing silicon nitride, silica and the said metal oxide.

3. A method according to claim 1 or claim 2 wherein the said metal oxide is employed in an amount such as to be contained in the grain boundaries of the silicon nitride in non-spinel form.

4. A method according to claim 2 or claim 3 wherein the ceramic composition contains from 1 to 5% by weight of MgO, and/or from 4 to 12% by weight of $Y_2O_3$ and/or from 4 to 12% by weight of $ZrO_2$.

5. A method according to any one of claims 1 to 5 wherein the ceramic composition has a density of at least 95% of the theoretical density, a transverse rupture strength of at least 46 MPa (67,000 psi) at 1200°C, and a hardness of at least 86 Rockwell 45-N.

6. A method according to any one of claims 1 to 5 wherein the ceramic composition has a density of at least 3.25 g/cm³.

7. A method according to any one of claims 1 to 3 wherein the ceramic composition has a modulus of elasticity which is no greater than $39 \times 10^5$ MPA ($56 \times 10^6$ psi).

8. A method according to any one of claims 1 to 5 wherein the ceramic composition has a thermal conductivity of at least $0.15$/g.cal.sec$^{-1}$ cm$^{-1}$ °C$^{-1}$ (3.0 BTU/Hr.in.°F) and a coefficient of thermal expansion no greater than $6.5 \times 10^{-6}$ °C$^{-1}$ ($1.9 \times 10^{-6}$ °F$^{-1}$).

9. A method according to any one of the preceding claims wherein the ceramic composition contains from 4 to 12% by weight of $Y_2O_3$ and $SiO_2$ in an amount such that the ratio of $Y_2O_3$ to $SiO_2$ is from 1.2 to 3.0.

10. A method according to Claim 9 wherein the ceramic composition has a density of at least 95% of the theoretical density, a thermal shock parameter at 1200°C of at least

$$321 \times 10^{16} \text{J.kg.h.}^{-1}, \text{ m}^{-3} (110 \times 10^9 \frac{\text{BTU-lbs}}{\text{Hr (in}^3)})$$

and a hardness of at least 87 Rockwell 45-N.

11. A method according to Claim 9 or Claim 10 wherein the ceramic composition has a bend strength of at least 480 MPa (70,000 psi) at 1200°C and a density of at least 3.398 g/cm³.

12. A method according to any one of Claims 10 to 12 wherein the ceramic composition has a thermal conductivity of at least 1.6 g.cal.sec$^{-1}$ cm$^{-1}$ °C$^{-1}$ (3.2 BTU/Hr. in °F), and a coefficient of thermal expansion no greater than $3.36 \times 10^{-6}$ °C$^{-1}$ ($1.87 \times 10^{-16}$ °F$^{-1}$).

13. A method according to any one of Claims 9 to 12 wherein the ceramic composition has a modulus of elasticity no greater than $3.6 \times 10^5$ MPa ($53 \times 10^6$ psi).

14. A ceramic composition comprising silicon nitride, from 4—12% by weight $Y_2O_3$ and $SiO_2$ in an amount such that the ratio of $Y_2O_3$ to $SiO_2$ is from 1.2 to 3.0.

15. A composition according to Claim 14 having a thermal shock parameter at 1200°C of at least $75 \times 10^{16}$ J.kg.h$^{-1}$ m$^{-3}$ ($26 \times 10^9$ BTU.lbs h.$^{-1}$ in$^{-3}$.

16. A composition according to Claim 14 or Claim 15 having a density of at least 95% of the theoretical density, a transverse rupture strength of at least 46 MPa (67,000 psi) at 1200°C, and a hardness of at least 86 Rockwell 45-N.

17. A composition according to any one of Claims 14 to 16 having a density of at least 3.25 g/cm³.

18. A composition according to any one of Claims 14 to 16 having a modulus of elasticity which is no greater than $39 \times 10^5$ MPa ($56 \times 106$ psi).

19. A composition according to any one of Claims 14 to 17 having a thermal conductivity of at least $0.15$/g.cal.sec$^{-1}$ cm$^{-1}$ °C$^{-1}$ (3.0 BTU/Hr.in.°F) and a coefficient of thermal expansion no greater than $6.5 \times 10^{-6}$ °C$^{-1}$ ($1.9 \times 10^{-6}$ °F$^{-1}$).

20. A composition according to any one of Claims 14 to 19 having a density of at least 95% of the theoretical density, a thermal shock parameter of 1200°C of at least

$$321 \times 10^{16} \text{ J.kg. h}^{-1} \text{ m}^{-3} (110 \times 10^9 \frac{\text{BTU-lbs}}{\text{Hr (in}^3)})$$

and a hardness of at least 87 Rockwell 45-N.

## Patentansprüche

1. Verfahren zur Bearbeitung von Gusseisen, dadurch gekennzeichnet, dass man das Gusseisen mit einem Schneidwerkzeug bearbeitet, das aus einer heissgepressten keramischen, mindestens ein unter $Y_2O_3$, $ZrO_2$ und MgO ausgewähltes Metalloxyd enthaltenden Siliciumnitrid-zusammensetzung besteht und einen thermischen Schockkennwert von mindestens $75 . 10^{16}$ J.kg.h$^{-1}$. m$^{-3}$ 1200°C besitzt.

2. Verfahren nach Anspruch 1, worin die keramische Zusammensetzung aus einem ternären, Siliciumnitrid, Siliciumdioxyd und dieses Metalloxyd enthaltenden System besteht.

3. Verfahren nach Anspruch 1 oder 2, worin dieses Metalloxyd in einer solchen Menge eingesetzt wird, dass es auf die Korngrenzen

des Siliciumnitrids in der nichtspinellartigen Form beschränkt ist.

4. Verfahren nach Anspruch 2 oder 3, worin die keramische Zusammensetzung 1 bis 5 Gew.-% MgO und/oder 4 bis 12 Gew.-% $Y_2O_3$ und/oder 4 bis 12 Gew.-% $ZrO_2$ enthält.

5. Verfahren nach einem der Ansprüche 1 bis 4, worin die keramische Zusammensetzung eine Dichte von mindestens 95% der theoretischen Dichte, eine Querbruchfestigkeit von mindestens 46 MPa bei 1200°C und eine Härte von mindestens 46 MPa bei 1200°C und eine Härte von mindestens 86 Rockwell 45-N aufweist.

6. Verfahren nach einem der Ansprüche 1 bis 5, worin die keramische Zusammensetzung eine Dichte von mindestens 3,25 g/cm³ besitzt.

7. Verfahren nach einem der Ansprüche 1 bis 3, worin die keramische Zusammensetzung einen Elastizitätsmodul aufweist, der $39 . 10^5$ MPa nicht übersteigt.

8. Verfahren nach einem der Ansprüche 1 bis 5, worin die keramische Zusammensetzung eine Wärmeleitfähigkeit von mindestens 0,15 $gcal.sec^{-1}$ $cm^{-1}$. $°C^{-1}$ und einen Wärmeausdehnungseffizienten von höchstens $6,5 . 10^{-6}$. $°C^{-1}$ aufweist.

9. Verfahren nach einem der vorhergehenden Ansprüche, worin die keramische Zusammensetzung 4 bis 12 Gew.-% $Y_2O_3$ und eine solche Menge $SiO_2$ enthält, dass das Verhältnis $Y_2O_3$ zu $SiO_2$ 1,2 bis 3,0 beträgt.

10. Verfahren nach Anspruch 9, worin die keramische Zusammensetzung eine Dichte von mindestens 95% der theoretischen Dichte, einen thermischen Schockkenwert von mindestens $321 . 10^{16}$ $J.kg.h^{-1}$. $m^{-3}$ und eine Härte von mindestens 87 Rockwell 45-N aufweist.

11. Verfahren nach Anspruch 9 oder 10, worin die keramische Zusammensetzung eine Biegefestigkeit von mindestens 480 MPa bei 1200°C und eine Dichte von mindestens 3,398 g/cm³ besitzt.

12. Verfahren nach einem der Ansprüche 10 bis 11, worin die keramische Zusammensetzung eine Wärmeleitfähigkeit von mindestens 1,6 $gcal.sec^{-1}$. $cm^{-1}$. $°C^{-1}$ und einen Wärmeausdehnungskoeffizienten von höchstens $3,36 . 10^{-6}$. $°C^{-1}$ aufweist.

13. Verfahren nach einem der Ansprüche 8 bis 12, worin die keramische Zusammensetzung einen Elastizitätsmodul besitzt, der $3,6 . 10^5$ MPa nicht übersteigt.

14. Keramische Zusammensetzung, bestehend aus Siliciumnitrid, 4 bis 12 Gew.-% $Y_2O_3$ und $SiO_2$ in einer solchen Menge, dass das Verhältnis $Y_2O_3$ zu $SiO_2$ 1,2 bis 3,0 beträgt.

15. Zusammensetzung nach Anspruch 14 mit einem thermischen Schockkennwert von mindestens $75 . 10^{16}$ $J.kg.h^{-1}$. $m^{-3}$.

16. Zusammensetzung nach Anspruch 14 oder 15 mit einer Dichte von mindestens 95% der theoretischen Dichte, einer Querbruchfestigkeit von mindestens 46 MPa bei 1200°C und einer Härte von mindestens 86 Rockwell 45-N.

17. Zusammensetzung nach einem der Ansprüche 14 bis 16 mit einer Dichte von mindestens 3,25 g/cm³.

18. Zusammensetzung nach einem der Ansprüche 14 bis 16 mit einem Elastizitätsmodul, der $39 . 10^5$ MPa nicht übersteigt.

19. Zusammensetzung nach einem der Ansprüche 14 bis 17 mit einer Wärmeleitfähigkeit von mindestens 0,15 $gcal.sec^{-1}$. $cm^{-1}$. $°C^{-1}$ und einem Wärmeausdehnungskoeffizienten von höchstens $6,5 . 10^{-6}$. $°C^{-1}$.

20. Zusammensetzung nach einem der Ansprüche 14 bis 19 mit einer Dichte von mindestens 95% der theoretischen Dichte, einem thermischen Schockkennwert von mindestens $321 . 10^{16}$ $J.kg.h^{-1}$. $m^{-1}$ bei 1200°C und einer Härte von mindestens 87 Rockwell 45-N.

**Revendications**

1. Procédé d'usinage de la fonte, caractérisé en ce qu'on usine la fonte avec un outil de coupe constitué d'une composition céramique de nitrure de silicium tressée à chaud et contentant au moins un oxyde métallique choisi parmi $Y_2O_3$, $ZrO_2$ et MgO, tout en ayant un paramètre de choc thermique à 1.200°C d'au moins $75 \times 10^{16}$ $J.kg.h^{-1}$ $m^{-3}$.

2. Procédé suivant la revendication 1, caractérisé en ce que la composition céramique comprend un système ternaire contenant du nitrure de silicium, de la silice et cet oxyde métallique.

3. Procédé suivant la revendication 1 ou 2, caracterisé en ce que cet oxyde métallique est utilisé en une quantité calculée de telle sorte qu'il soit contenu sous forme non-spinelle dans les limites des grains du nitrure de silicium.

4. Procédé suivant la revendication 2 ou 3, caractérisé en ce que la composition céramique contient 1 à 5% en poids de MgO et/ou 4 à 12% en poids d'$Y_2O_3$ et/ou 4 à 12% en poids de $ZrO_2$.

5. Procédé suivant l'une quelconque des revendications 1 à 5, caractérisé en ce que la composition céramique a une densité d'au moins 95% de la densité théorique, une résistance à la rupture dans le sens transversal d'au moins 46 MPa (67.000 libres par pouce carré) à 1.200°C et une dureté d'au moins 86 Rockwell 45-N.

6. Procédé suivant l'une quelconque des revendications 1 à 5, caractérisé en ce que la composition céramique a une densité d'au moins 3,25 g/cm³.

7. Procédé suivant l'une quelconque des revendications 1 à 3, caractérisé en ce que la composition céramique a un module d'élasticité ne dépassant pas $39 \times 10^5$ MPa ($56 \times 10^6$ livres par pouce carré).

8. Procédé suivant l'une quelconque des revendications 1 à 5, caractérisé en ce que la

composition céramique a une conductibilité thermique d'au moins 0,15/g.cal.sec$^{-1}$ cm$^{-1}$ °C$^{-1}$ (3,0 BTU/H. pouce. °F) et un coefficient de dilatation thermique ne dépassant pas 6,5×10$^{-6}$ °C$^{-1}$ (1,9×10$^{-6}$ °F$^{-1}$).

9. Procédé suivant l'une quelconque des revendications précédentes, caractérisé en ce que la composition céramique contient 4 à 12% en poids d'$Y_2O_3$ et du $SiO_2$ en une quantité calculée de telle sorte que le rapport entre $Y_2O_3$ et $SiO_2$ se situe entre 1,2 et 3.

10. Procédé suivant la revendication 9, caractérisé en ce que la composition céramique a une densité d'au moins 95% de la densité théorique, un paramètre de choc thermique à 1.200°C d'au moins

$$321 \times 10^{16} \, J.kg.h^{-1} \, m^{-3} (110 \times 10^9 \frac{BTU\text{-livres}}{H \, (pouce^3)})$$

et une dureté d'au moins 87 Rockwell 45-N.

11. Procédé suivant la revendication 9 ou 10, caractérisé en ce que la composition céramique a une résistance à la flexion d'au moins 480 MPa (70.000 livres par pouce carré) à 1.200°C et une desité d'au moins 3,398 g/cm³.

12. Procédé suivant l'une quelconque des revendications 10 à 12, caractérisé en ce que la composition céramique a une conductibilité thermique d'au moins 1,6 g.cal.sec$^{-1}$ cm$^{-1}$ °C$^{-1}$ (3,2 BTU/H. pouce °F) et un coefficient de dilatation thermique ne dépassant pas 3,36×10$^{-6}$ °C$^{-1}$ (1,87×10$^{-16}$ °F$^{-1}$).

13. Procédé suivant l'une quelconque des revendications 9 à 12, caractérisé en ce que la composition céramique a un module d'élasticité ne dépassant pas 3,6×10$^5$MPa (53×10$^6$ livres par pouce carré).

14. Composition céramique comprenant du nitrure de silicium, 4 à 12% en poids d'$Y_2O_3$ et du $SiO_2$ en une quantité calculée de telle sorte que le rapport entre $Y_2O_3$ et $SiO_2$ se situe entre 1,2 et 3.

15. Composition suivant la revendication 14, caractérisée en ce qu'elle a un paramètre de choc thermique à 1.200°C d'au moins 75×10$^{16}$ J.kg.h$^{-1}$ m$^{-3}$ (16×10$^0$ BTU.livres h$^{-1}$ pouce$^{-3}$.

16. Composition suivant la revendication 14 ou 15, caractérisée en ce qu'elle a une densité d'au moins 95% de la densité théorique, une résistance à la rupture dans le sens transversal d'au moins 46 MPa (67.000 livres par pouce carré) à 1.200°C et une dureté d'au moins 86 Rockwell 45-N.

17. Composition suivant l'une quelconque des revendications 14 à 16, caractérisée en ce qu'elle a une densité d'au moins 3,25 g/cm³.

18. Composition suivant l'une quelconque des revendications 14 à 16, caractérisée en ce qu'elle a un module d'élasticité ne dépassant pas 39×10$^5$ MPa (56×10$^6$ livres par pouce carré).

19. Composition suivant l'une quelconque des revendications 14 à 17, caractérisée en ce qu'elle a une conductibilité thermique d'au moins 0,15/g.cal.sec$^{-1}$ cm$^{-1}$ °C$^{-1}$ (3,0 BTU/H.pouce. °F) et un coefficient de dilatation thermique ne dépassant pas 6,5×10$^{-6}$ °C$^{-1}$ (1,9×10$^{-6}$ °F$^{-1}$).

20. Composition suivant l'une quelconque des revendications 14 à 19, caractérisée en ce qu'elle a une densité d'au moins 95% de la densité théorique, un paramètre de choc thermique à 1.200°C d'au moins

$$321 \times 10^{16} \, J.kg.h^{-1} \, m^{-3} (110 \times 10^9 \frac{BTU\text{-livres}}{H \, (pouce^3)})$$

et une dureté d'au moins 87 Rockwell 45-N.

Motion Of Work Piece

Cutting Tool Material

Tool Holder

Motion Of Holder

FIG. 1.

FIG. 2.

FIG. 3.

Clamp

Locate

$Si_3N_4 + 8\% Y_2O_3$
(Continuous Cutting)

$Si_3N_4 + 12\% Y_2O_3$
(Continuous Cutting)

$Si_3N_4 + 8\% Y_2O_3$
(Interrupted Cutting)

$Si_3N_4 + 12\% Y_2O_3$
(Interrupted Cutting)

Parts Produced (Wear Life To Failure)

800

600

400

200

0

25    50    75    100    125    150    175    200

Thermal Shock Parameter

$$\left[\frac{KS}{\propto}\right] \quad \frac{BTU-LBS}{HR-IN^3}$$

FIG. 4

1500

1000

500

0

Parts Produced

1    2    3    4

$Y_2O_3/SiO_2 \longrightarrow$

FIG. 5